**Europäisches Patentamt**

(19) **European Patent Office**

**Office européen des brevets**

(11) Veröffentlichungsnummer: **0 009 112**
A2

(12) # EUROPÄISCHE PATENTANMELDUNG

(21) Anmeldenummer: **79102911.9**

(22) Anmeldetag: **10.08.79**

(51) Int. Cl.³: **B 60 R 19/06, F 16 F 9/06**

(30) Priorität: **21.09.78 DE 2841027**

(43) Veröffentlichungstag der Anmeldung: **02.04.80**
Patentblatt 80/7

(84) Benannte Vertragsstaaten: **FR GB IT SE**

(71) Anmelder: **Boge GmbH, Bogestrasse 50, D-5208 Eitorf/Sieg (DE)**

(72) Erfinder: **Kuchheuser, Werner, Stromberg, D-5227 Windeck 21 (DE)**

(54) **Hydropneumatischer Pralldämpfer mit zwei ineinander schieblichen Rohren, insbesondere für Kraftfahrzeuge.**

(57) Bei einem Pralldämpfer mit zwei ineinanderschieblichen Rohren (1, 18), insbesondere für Kraftfahrzeuge, zum Abbremsen eines auf ein Hindernis prallenden Fahrzeugs durch hydraulische Dämpfungskräfte und Gasfederkräfte, weist ein durch einen Boden (2) abgeschlossenes Innenrohr (1) vom Boden (2) angefangen hintereinander einen ein Gaspolster von hohem Druck aufnehmenden Gasraum (3), einen in dem Innenrohr (1) dicht und verschieblich geführten Trennkolben (4), einen ersten Flüssigkeitsraum (6), eine in dem Innenrohr (1) festgelegte und mit Drosselöffnungen (8) versehene Zwischenwand (7), einen zweiten Flüssigkeitsraum (11) und einen in dem Innenrohr (1) verschieblich geführten, gegenüber dem Innenmantel des Innenrohrs (1) gedichteten Arbeitskolben (12) an einem Ende einer Kolbenstange (15) auf, wobei die Kolbenstange (15) aus dem Innenrohr (1) austritt und ihr anderes Ende mit einem Boden (17) eines auf dem Innenrohr (1) verschieblich geführten Außenrohrs (18) verbunden ist.

Zwecks einer problemlosen Festlegung der Ausgangslage bei gleichzeitiger Erhöhung der Wirksamkeit der Fläche des Innenrohres (1) für den Aufbau der Gaskräfte ist der Arbeitskolben (12) undurchlässig, tritt die Kolbenstange (15) dichtungslos und führungslos aus dem Innenrohr (1) aus und ist die Ausgangsstellung durch unmittelbares Anschlagen des Arbeitskolbens (12) an nach innen gerichteten Vorsprüngen (14) des Innenrohrs (1) festgelegt.

– 1 –

Hydropneumatischer Pralldämpfer mit zwei
ineinander schieblichen Rohren, insbesondere
für Kraftfahrzeuge

Die Erfindung bezieht sich auf einen Pralldämpfer mit zwei ineinander schieblichen Rohren, insbesondere für Kraftfahrzeuge, zum Abbremsen eines auf ein Hindernis prallenden Fahrzeuges durch hydraulische Dämpfungskräfte und Gasféderkräfte, bei dem ein durch einen Boden abgeschlossenes Innenrohr vom Boden angefangen hintereinander einen ein Gaspolster von hohem Druck aufnehmenden Gasraum, einen in dem Innenrohr dicht und verschieblich geführten Trennkolben, einen ersten Flüssigkeitsraum, eine in dem Innenrohr festgelegte und mit Drosselöffnungen versehene Zwischenwand, einen zweiten Flüssigkeitsraum und einen in dem Innenrohr verschieblich geführten, gegenüber dem Innenmantel des Innenrohres gedichteten Arbeitskolben an einem Ende einer Kolbenstange aufweist, die aus dem Innenrohr austritt und deren anderes Ende mit einem Boden eines auf dem Innenrohr verschieblich geführten Außenrohrs verbunden ist.

./2

- 2 -

Bei dem aus der DE-AS 21 63 921 bekannten Dämpfer dieser Art tritt die Kolbenstange durch einen zwischen dem Innenrohr und der Kolbenstange eingesetzten Endstopfen hermetisch abgedichtet nach außen und unterteilt der Arbeitskolben den zweiten Flüssigkeitsraum in zwei Abteile, die sich über Durchflußkanäle des Arbeitskolbens in ständiger Verbindung miteinander befinden. In nachteiliger Weise kann unter Ausnutzung der maximalen Druckbelastbarkeit des Innenrohres lediglich die im Verhältnis zur Fläche des Innenrohres, d.h. zur Verdrängungsfläche des Arbeitskolbens kleine Verdrängungsfläche der Kolbenstange zum Aufbau der Gasfederkräfte herangezogen werden.

Für den Aufbau der von der Fläche des Innenrohres abhängigen Dämpfungskräfte sind in unübersichtlicher Weise sowohl der Strömungswiderstand der Durchflußkanäle des Arbeitskolbens als auch der der Drosselöffnungen der Zwischenwand maßgebend. Die Kolbenstange ist mit einem Anschlagring versehen, der die Ausfahrbewegung des Arbeitskolbens in Richtung auf den Endstopfen begrenzt, wodurch die Ausgangsstellung des Dämpfers in problemloser Weise festgelegt ist.

Bei dem aus der DE-OS 22 45 59o bekannten Pralldämpfer mit zwei ineinander schieblichen Rohren stimmt die Raumform des Innenrohres hinsichtlich Boden, Gaspolster, Trennkolben, erstem Flüssigkeitsraum, Zwischenwand mit der eingangs genannten Raumform überein, während in Abweichung davon ein mit einer Kolbenstange verbundener Arbeitskolben fehlt und der zweite Flüssigkeitsraum in einem gegenüber dem Innenrohr abgedichteten, von dem Außenrohr umschlossenen Raum angeordnet ist. Die gesamte Fläche des Innenrohres kann als Verdrängungsfläche zum Aufbau der Gasfederkräfte herangezogen werden. Für den Aufbau der ebenfalls von der Fläche des Innenrohres abhängigen Dämpfungskräfte ist in eindeutiger Weise ausschließlich der Strömungswiderstand der Drosselöffnungen in der Zwischenwand maßgebend. Wie die Ausgangsstellung des Dämpfers festgelegt werden kann, ist in der DE-OS 22 45 590 nicht offenbart und wirft Probleme auf, durch die der an sich einfache Aufbau der offenbarten Dämpferausbildung in nachteiliger Weise nicht erhalten bleiben kann.

Die Erfindung befaßt sich mit der Aufgabe, einen Dämpfer der eingangs genannten Art zu schaffen, der mit einfachen Mitteln die Eigenheiten des Dämpfers nach der DE-AS 21 63 921 hinsichtlich einer problemlosen Festlegung der Ausgangslage mit den Eigenheiten des Dämpfers nach der DE-OS 22 45 590 hinsichtlich einer Wirksamkeit der Fläche des Innenrohres für den Aufbau der Gasfederkräfte miteinander vereint, um den Anteil derselben gegenüber dem bei dem Dämpfer nach DE-AS 21 63 921 erhöhen zu können. Diese Aufgabe wird erfindungsgemäß dadurch gelöst, daß der Arbeitskolben undurchlässig ist, die Kolbenstange dichtungslos und führungslos aus dem Innenrohr austritt und die Ausgangsstellung durch unmittelbares Anschlagen des Arbeitskolbens an nach innen gerichteten Vorsprüngen des Innenrohres festgelegt ist.

- 4 -

Durch diese Maßnahme ist die durch den Innendurchmesser des Innenrohres gegebene Fläche, die der Verdrängungsfläche des Arbeitskolbens identisch ist, wirksam für den Aufbau der Gasfederkräfte und können die
Gasfederkräfte in vorteilhafter Weise entsprechend
sehr hoch ausgelegt werden. Die durch den Innendurchmesser des Innenrohres gegebene Fläche ist ebenfalls für den Aufbau der Dämpfungskräfte wirksam, wobei in weiterhin vorteilhafter, eindeutiger Weise ausschließlich der Strömungswiderstand der Drosselöffnungen in der
Zwischenwand für die Höhe der Dämpfungskräfte maßgebend
ist. Zugleich sind gegenüber dem Dämpfer nach DE-OS
22 45 590 eine problemlose Festlegung der Ausgangsstellung
und gegenüber dem Dämpfer nach DE-AS 21 63 921 eine
konstruktive Vereinfachung durch Fortfall eines Endstopfens
erreicht. Der durch letztere Maßnahme bedingte Gewinn
an Einbaulänge kann in etwa die größere Einbaulänge des
Gasraums ausgleichen, dessen Volumen nicht der Fläche
der Kolbenstange sondern der Fläche des Arbeitskolbens
anzupassen ist.

Die bei einem Eindringen des Arbeitskolbens in das Innenrohr erzeugten Dämpfungskräfte und Gasfederkräfte können
durch zusätzliche Dämpfungskräfte und Federkräfte in der
Weise erhöht werden, daß der zwischen der Kolbenstange
und dem Außenrohr gebildete, von dem Boden des Außenrohres und dem Arbeitskolben begrenzte Ringraum mit
einer drucklosen oder unter einem Vordruck stehenden
Flüssigkeit gefüllt ist. Bei einer ersten Betätigung des
Pralldämpfers und entsprechender Verschiebung des Innen-

- 5 -

rohres in das Außenrohr wird dann die aus dem Außendurchmesser und dem Innendurchmesser des Innenrohrs resultierende Ringfläche als Verdrängungsfläche in dem genannten Ringraum wirksam, und es entstehen Federkräfte aus
dem Elastizitätsverhalten der in den Ringraum gefüllten
Flüssigkeit und Dämpfungskräfte aus dem Strömungswiderstand des Spaltes zwischen Innenrohr und Außenrohr oder
dem Strömungswiderstand besonders vorgesehener Strömungskanäle, über die ein Teil der Flüssigkeit aus dem
Ringraum entweicht. Wenn nach einer Rückkehr des Pralldämpfers in die Ausgangsstellung ein zweiter Prellschlag
erfolgt und dabei eine zusätzliche Bremsfunktion des genannten Ringraums fehlt oder eingeschränkt ist, muß dies
nicht nachteilig sein, da ein zweiter Prellschlag von Haus
aus eine geringere Bremskraft erfordert als der erste Prellschlag. Der Ringraum kann nach überstandenem Aufprall des
Fahrzeugs auf ein Hindernis dadurch wieder voll einsatzfähig gemacht werden, daß der Ringraum über ein geeignetes
Füllventil nachgefüllt wird, ohne daß ein Ausbau des Pralldämpfers aus dem Fahrzeug erfolgen muß.

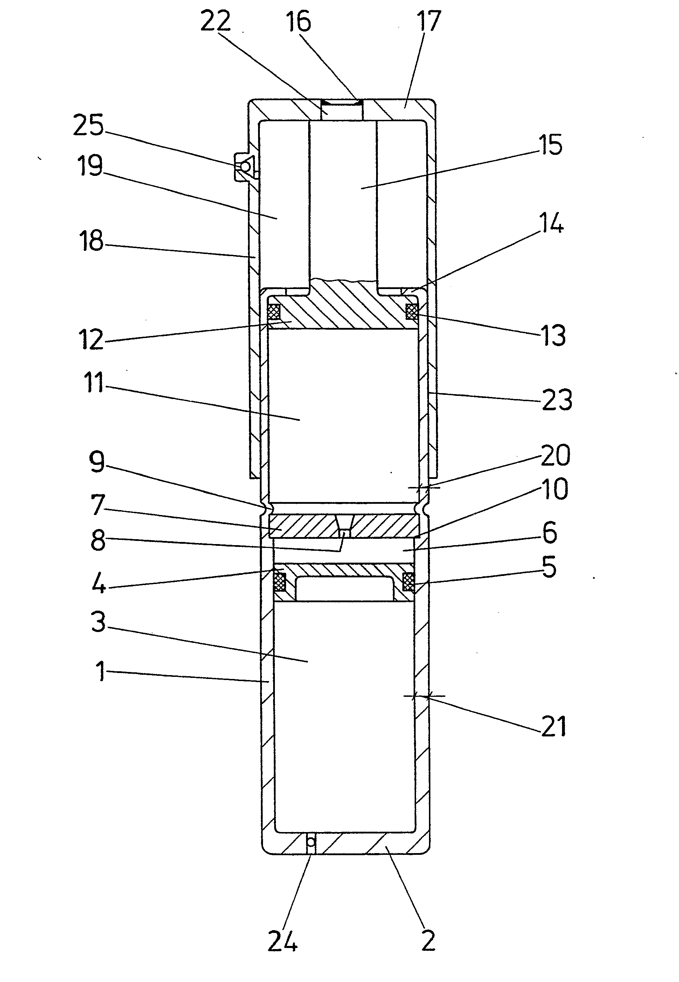

Auf der Zeichnung ist ein als Ausführungsbeispiel gewählter
Pralldämpfer nach der Erfindung dargestellt. Bei diesem
enthält ein durch einen Boden 2 abgeschlossenes Innenrohr 1
hintereinander einen ein Gaspolster aufnehmenden Gasraum 3,
einen gegenüber dem Innenrohr 1 verschieblichen und durch
einen Dichtring 5 gedichteten Trennkolben 4, einen ersten
Flüssigkeitsraum 6, eine zwischen einer Schulter 1o und
einer Sicke 9 des Innenrohres 1 festgelegte Zwischenwand 7,
einen zweiten Flüssigkeitsraum 11 und einen gegenüber dem Innenrohr 1 verschieblichen und durch einen Dichtring 13 gedichteten Arbeitskolben 12 am Ende einer Kolbenstange 15, die führungslos und dichtungslos aus dem Innenrohr 1 austritt. Der Arbeitskolben 12 ist undurchlässig und liegt in der gezeichneten Ausgangsstellung an nach innen gebördelten Vorsprüngen 14 des Innenrohrs 1 an. Die Zwischenwand 7 ist mit einer, den ersten Flüssigkeitsraum 6 und den zweiten Flüssigkeitsraum 11 miteinander verbindenden Drosselöffnung 8 versehen. Im Boden 2 ist eine durch eine eingepresste Kugel geschlossene Füllöffnung 24 zum Einfüllen des Gases angeordnet. Ein durch einen Boden 17 abgeschlossenes Außenrohr 18 ist auf dem Außenmantel des Innenrohres 1 verschieblich geführt und bildet einen von der Kolbenstange 15 durchdrungenen Ringraum 19. Das in einen Zapfen 22 übergehende freie Ende der Kolbenstange 15 ist mittels einer Schweißnaht 16 mit dem Boden 17 verbunden.

Das Innenrohr 1 und das Außenrohr 18 sind im Einbauzustand mit Teilen eines Fahrzeugs verbunden zu denken, beispielsweise das Außenrohr 18 mit einer Stoßstange und das Innenrohr 1 mit dem Fahrzeugaufbau. Wenn die Stoßstange auf ein Hindernis prallt, dabei der Arbeitskolben 12 in Richtung auf die Zwischenwand 7 verschoben und Flüssigkeit aus dem zweiten Flüssigkeitsraum 11 durch die Drosselöffnung 8 in den ersten Flüssigkeitsraum 6 verdrängt wird, erzeugt der Pralldämpfer das Fahrzeug abbremsende hydraulische Dämpfungskräfte und Gasfederkräfte. Die Dämpfungskräfte sind durch den Strömungswiderstand der Drosselöffnung 8 bedingt, und ihre Höhe ist durch deren Größe und Ausbildung eindeutig bestimmt. Die in den ersten Flüssigkeitsraum 6

- 7 -

verdrängte Flüssigkeit bewirkt eine Verschiebung des Trennkolbens 4 in Richtung auf den Boden 2 und eine Verkleinerung des Gasraums 3. Der dadurch bedingte Druckanstieg des Gases, sowie sein Ausgangsdruck und sein Ausgangsvolumen bestimmen die Größe der Gasfederkräfte.

Am Ende der Einfahrbewegung des Arbeitskolbens 12 stellt sich in den beiden Flüssigkeitsräumen 6 und 11 ein gleicher Druck ein, der infolge der eingetretenen Kompression des Gases erheblich höher als der Ausgangsdruck des Gases sein kann. Dann ist das Innenrohr 1 in dem Bereich zwischen verschobenem Arbeitskolben 12 und Boden 2 höher druckbelastet als in dem Bereich zwischen verschobenem Arbeitskolben 12 und den Vorsprüngen 14, unter der Annahme, daß sich in dem durch einen Spalt 23 zwischen dem Außenrohr 18 und dem Innenrohr 1 entlüfteten Ringraum 19 kein nennenswerter Druck aufbauen kann. Darum ist die Wandstärke 2o des Innenrohrs 1 von den Vorsprüngen 14 bis zur Zwischenwand 7 schwächer ausgeführt als die Wandstärke 21 von der Zwischenwand 7 bis zum Boden 2.

Der Ringraum 19 kann über ein Füllventil 25 mit einer drucklosen oder einer unter Druck stehenden Flüssigkeit gefüllt sein, die in der Ausgangsstellung nicht entweichen kann, wenn der Spalt 23 entsprechend eng und dicht ist, wobei auch andere nicht gezeichnete Dichtmittel angewendet werden können. Nunmehr baut sich bei einer Betätigung des Pralldämpfers auch in dem Ringraum 19 ein Druck auf und entstehen zusätzliche Dämpfungskräfte und Federkräfte, die dem Strömungswiderstand des Spaltes 23 bzw. der Elastizität der in den Ringraum gefüllten Flüssigkeit entsprechen, wobei die durch die Wandstärke 2o bestimmte Ringfläche

./8

0009112

- 8 -

wirksame Kolbenfläche ist. Der Ringraum 19 ist über
das Füllventil 25 nachfüllbar, um die entwichene
Flüssigkeit ersetzen zu können.

0009112

- 1 -

Patentansprüche:

1. Pralldämpfer mit zwei ineinander schieblichen Rohren (1, 18), insbesondere für Kraftfahrzeuge, zum Abbremsen eines auf ein Hindernis prallenden Fahrzeugs durch hydraulische Dämpfungskräfte und Gasfederkräfte, bei dem ein durch einen Boden (2) abgeschlossenes Innenrohr (1) vom Boden (2) angefangen hintereinander einen ein Gaspolster von hohem Druck aufnehmender Gasraum (3), einen in dem Innenrohr (1) dicht und verschieblich geführten Trennkolben (4), einen ersten Flüssigkeitsraum (6), eine in dem Innenrohr (1) festgelegte und mit Drosselöffnungen (8) versehene Zwischenwand (7), einen zweiten Flüssigkeitsraum (11) und einen in dem Innenrohr (1) verschieblich geführten, gegenüber dem Innenmantel des Innenrohrs (1) gedichteten Arbeitskolben (12) an einem Ende einer Kolbenstange (15) aufweist, die aus dem Innenrohr (1) austritt und deren anderes Ende mit einem Boden (17) eines auf dem Innenrohr (1) verschieblich geführten Außenrohrs (18) verbunden ist, dadurch gekennzeichnet, daß der Arbeitskolben (12) undurchlässig ist, die Kolbenstange (15) dichtungslos und führungslos aus dem Innenrohr (1) austritt und die Ausgangsstellung durch unmittelbares Anschlagen des Arbeitskolbens (12) an nach innen gerichteten Vorsprüngen (14) des Innenrohrs (1) festgelegt ist.

./2

- 2 -

2.   Pralldämpfer nach Anspruch 1,

dadurch gekennzeichnet,

daß der zwischen der Kolbenstange (15) und dem Außenrohr (18) gebildete, von dem Boden (17) des Außenrohrs und dem Arbeitskolben (12) begrenzte Ringraum (19) mit einer drucklosen oder unter einem Vordruck stehenden Flüssigkeit gefüllt ist.

3.   Pralldämpfer nach Anspruch 2,

dadurch gekennzeichnet,

daß der Ringraum (19) über ein Füllventil (25) nachfüllbar ist.

0009112